# EUROPEAN PATENT APPLICATION

(11) **EP 4 745 191 A1**
(43) Date of publication of application: **20.05.2026**
(21) Application number: 24842935.9
(22) Date of filing: 02.07.2024
(51) Int. Cl.: C08L 27/06, C08J 5/18, C08K 3/22, C08K 3/26, C08K 5/02, C08K 5/07, C08K 5/524, C08L 51/04

(54) **POLYVINYL CHLORIDE-BASED RESIN COMPOSITION, AND FILM PRODUCED THEREFROM**

(30) Priority: 14.07.2023 JP 2023115554
(71) Applicant: Riken Technos Corporation, Tokyo 101-8336 (JP)
(72) Inventor: OKADA, Toshihiko, Tokyo 101-8336 (JP)
(74) Representative: J A Kemp LLP
(86) International application number: PCT/JP2024/023918
(87) International publication number: WO 2025/018141

(57) **Abstract**

Provided are: a polyvinyl chloride-based resin composition which has excellent process thermal stability and enables the suppression of discoloration in a film when the film is formed from the composition continuously; and a film which is formed from the composition and is suitable as a base material for wallpaper having a white-based design. The present invention is a polyvinyl chloride-based resin composition which comprises: 100 parts by mass of a resin mixture comprising 60-100% by mass of (A) a polyvinyl chloride-based resin and 40-0% by mass of (B) a core-shell rubber; 0.01-5 parts by mass of (C) a β-diketone compound; 0.01-10 parts by mass of (D) a phosphite compound; and 0-100 parts by mass of (E) a flame retardant. In the composition, the sum of the blending amount of the polyvinyl chloride-based resin (A) and the blending amount of the core-shell rubber (B) in the resin mixture is 100% by mass. The phosphite compound (D) may comprise one or more components selected from the group consisting of trialkyl phosphites, alkyl aryl phosphites and triaryl phosphites.

## Description

### TECHNICAL FIELD

The present invention relates to a polyvinyl chloride resin composition and a film formed therefrom.

More specifically, the present invention relates to a polyvinyl chloride resin composition with which coloring is suppressed when a film is continuously produced, and a film formed therefrom.

### BACKGROUND ART

Conventionally, decorated or dressed adhesive films (so-called wallpapers) have been bonded to the wall surfaces of buildings for decoration or dressing, the buildings made of: wood-based materials such as wood, plywood, laminated wood, particle board, and hard board; metal-based materials such as iron and aluminum; and inorganic-based materials such as gypsum. In addition, conventionally, dressed or decorated base materials have been used as members of home electric appliances such as a refrigerator, a washing machine, an air conditioner, a mobile phone, and a personal computer; members of furniture such as a display shelf, a storage chest, a cupboard, and a desk; or members of buildings such as a floor, a wall, and a bathroom. Such dressed or decorated base materials are obtained by bonding a decorative sheet to the surfaces of: base materials formed from wood-based materials such as wood, plywood, laminated wood, particle board, and hard board; base materials formed from resin-based materials such as polystyrene, acrylonitrile-butadiene-styrene copolymer resin (ABS resin), polycarbonate, and polyester; or base materials formed from metal-based materials such as iron and aluminum. As for such wallpaper and decorative sheets, those having a design based on white are often used. Furthermore, as film base materials for wallpaper or decorative sheets, films made from a polyvinyl chloride resin composition often have been used. This is because polyvinyl chloride resin compositions can have flexibility adjusted in a wide range depending on the amount of the plasticizer, and they have good properties such as molding processability, mechanical properties, and flame retardancy, and are also excellent in economic efficiency. However, polyvinyl chloride resin compositions often have insufficient process thermal stability. Therefore, when a film is continuously produced using a polyvinyl chloride resin composition, there has been a disadvantage that yellowness gradually increases so that a desired design cannot be imparted, and particularly for a design based on white, a desired white cannot be expressed.

Furthermore, for materials used for the interior of a building, the use of a fireproof material is required by the Building Standards Act. The fireproof materials are classified into one of the "incombustible material", the "quasi-incombustible material", the "flame retardant material", and the like, and those having passed the applicable test specified by a notice of the Ministry of Land, Infrastructure, Transport and Tourism are used after receiving a certificate from the Ministry. Therefore, wallpapers need to be at least subjected to one of the applicable tests and receive the certificate from the Ministry, as a decorative finishing material used for the interior of a building. Therefore, for film base materials of such wallpapers, the use of a material containing a flame retardant is demanded. However, a polyvinyl chloride resin composition containing a flame retardant, particularly a polyvinyl chloride resin composition containing a halogen element-containing flame retardant, has insufficient process thermal stability, and has a disadvantage that yellowness tends to gradually increase when a film is continuously produced.

### CITATION LIST

### PATENT LITERATURE

PATENT LITERATURE 1: JP 2017-105929 A
PATENT LITERATURE 2: JP H07-048493 A
PATENT LITERATURE 3: JP 2020-041033 A

### SUMMARY OF INVENTION

### TECHNICAL PROBLEM

An object of the present invention is to provide a polyvinyl chloride resin composition that has good process thermal stability, and suppresses coloring when a film is continuously produced; and a film produced therefrom.

### SOLUTION TO PROBLEM

As a result of intensive studies, the present inventor has found that the above object can be achieved by a specific polyvinyl chloride resin composition.

That is, embodiments of the present invention are as follows.
[1]. A polyvinyl chloride resin composition comprising:
   100 parts by mass of a resin mixture,
      the resin mixture consisting of:
         (A) 60 to 100 mass% of a polyvinyl chloride resin, and
         (B) 40 to 0 mass% of a core-shell rubber,
      wherein the sum of the mass% of (A) the polyvinyl chloride resin and the mass% of (B) the core-shell rubber is 100 mass% in the resin mixture;
   (C) a β-diketone compound in an amount of 0.01 to 5 parts by mass based on 100 parts by mass of the resin mixture;
   (D) a phosphite compound in an amount of 0.01 to 10 parts by mass based on 100 parts by mass of the resin mixture; and
   (E) a flame retardant in an amount of 0 to 100 parts by mass based on 100 parts by mass of the resin mixture.
[2]. The polyvinyl chloride resin composition according to [1], wherein the (D) phosphite compound includes one or more selected from the group consisting of a trialkyl phosphite, an alkyl aryl phosphite, and a triaryl phosphite.
[3]. The polyvinyl chloride resin composition according to [1], wherein the (D) phosphite compound includes one or more selected from the group consisting of a trialkyl phosphite and an alkyl aryl phosphite.
[4]. The polyvinyl chloride resin composition according to [1], wherein the (D) phosphite compound includes a trialkyl phosphite and an alkyl aryl phosphite.
[5]. The polyvinyl chloride resin composition according to any one of [1] to [4], comprising no hindered phenol compound.
[6]. The polyvinyl chloride resin composition according to any one of [1] to [5], wherein the polyvinyl chloride resin composition further comprises the (E) flame retardant in an amount of 1 to 100 parts by mass based on 100 parts by mass of the resin mixture consisting of the (A) polyvinyl chloride resin and the (B) core-shell rubber.
[7]. The polyvinyl chloride resin composition according to any one of [1] to [6], wherein the (E) flame retardant includes a flame retardant containing a halogen element.
[8]. The polyvinyl chloride resin composition according to any one of [1] to [7], wherein the (E) flame retardant includes a brominated hydrocarbon flame retardant and an antimony-containing flame retardant.
[9]. The polyvinyl chloride resin composition according to any one of [1] to [8], further comprising:
   (F) 1 to 250 parts by mass of a plasticizer;
   (G) 0.01 to 10 parts by mass of a barium-zinc composite compound;
   (H) 0.01 to 3 parts by mass of a hydrotalcite; and
   (J) 0.01 to 10 parts by mass of an ultraviolet absorber.
[10]. A film formed from the polyvinyl chloride resin composition according to any one of [1] to [9].
[11]. A wallpaper or a decorative sheet comprising the film according to [10].

### ADVANTAGEOUS EFFECTS OF INVENTION

The polyvinyl chloride resin composition of the present invention has good process thermal stability, and can suppress coloring when a film is continuously produced by using the same. Preferably, the polyvinyl chloride resin composition of the present invention is excellent in process thermal stability even when a flame retardant is contained therein, and can suppress coloring when a film is continuously produced by using the same. Therefore, the film formed from the polyvinyl chloride resin composition of the present invention can be suitably used as a film base material of wallpaper or a decorative sheet. Therefore, the polyvinyl chloride resin composition according to a preferable embodiment of the present invention can be suitably used for wallpaper or a decorative sheet as a film base material that has a design based on white and is imparted with flame retardancy.

### BRIEF DESCRIPTION OF DRAWINGS

[FIG. 1]

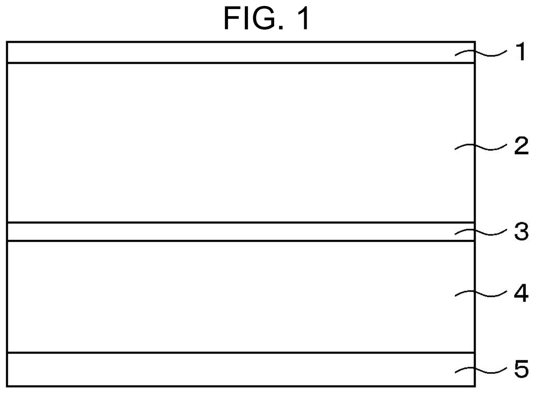

FIG. 1 is a conceptual cross-sectional view showing an example of wallpaper using a film of the present invention.

### DESCRIPTION OF EMBODIMENTS

In the present specification, the term "resin" is used as a term including a resin mixture containing two or more kinds of resins and a resin composition containing a component other than a resin.

In the present specification, the term "film" is used so as to be mutually changed to or mutually substituted with a "sheet". In the present specification, the terms "film" and "sheet" are used for those that can be industrially wound into a roll. The term "plate" is used for those that cannot be industrially wound into a roll. In the present specification, sequentially laminating a certain layer and another layer includes both directly laminating these layers; and laminating these layers with one or more other layers such as an anchor coat interposed therebetween.

In the present specification, the term "or more" related to a numerical range is used to mean a certain numerical value, or values more than the certain numerical value. For example, 20% or more means 20%, or values more than 20%. The term "or less" related to a numerical range is used to mean a certain numerical value, or values less than the certain numerical value. For example, 20% or less means 20%, or values less than 20%. A numerical range "x to y" including the symbol "to" is used to mean a certain numerical value x, values more than the certain numerical value x and less than another certain numerical value y, or the other certain numerical value y. Here, the other certain numerical value y is larger than the certain numerical value x. For example, 10 to 90% means 10%, values more than 10% and less than 90%, or 90%. Furthermore, the upper limits and the lower limits of numerical ranges can be arbitrarily combined, and an arbitrarily combined embodiment can be read. For example, when numerical ranges of a certain property are described as "usually 10% or more, and preferably 20% or more, but usually 40% or less, and preferably 30% or less" and "usually 10 to 40%, and preferably 20 to 30%", the numerical range of the certain property can be read therefrom as 10 to 40%, 20 to 30%, 10 to 30%, or 20 to 40% in an embodiment.

All numerical values used in the present specification and claims, except in examples, or unless otherwise specified, should be understood as modified by the term "about". Without limiting the application of the doctrine of equivalents to claims, each numerical value should be interpreted in light of significant digits and by applying ordinary rounding techniques.

In the present specification, terms that specify shapes and geometric conditions, for example, terms such as parallel, orthogonal, and perpendicular, include not only strict meanings but also substantially the same states.

In the present specification, when description is made as "comprising a certain substance", containing the certain substance, consisting of the certain substance, or consisting only of the certain substance can be read in an embodiment. For example, from the description of "composition A comprises substance a1 and substance a2", it can be read in an embodiment that composition A contains substance a1 and substance a2, that composition A consists of substance a1 and substance a2, or that composition A consists only of substance a1 and substance a2.

### 1. Polyvinyl chloride resin composition

The polyvinyl chloride resin composition of the present invention comprises (A) a polyvinyl chloride resin, (C) a β-diketone compound, and (D) a phosphite compound. In an embodiment, the polyvinyl chloride resin composition of the present invention comprises (A) a polyvinyl chloride resin, (B) a core-shell rubber, (C) a β-diketone compound, and (D) a phosphite compound. In a preferred embodiment, the polyvinyl chloride resin composition of the present invention further comprises (E) a flame retardant in addition to the components (A), (C), and (D), or in addition to the components (A), (B), (C), and (D). Each component will be described below.

### (A) Polyvinyl chloride resin

The polyvinyl chloride resin composition of the present invention comprises (A) a polyvinyl chloride resin. The (A) polyvinyl chloride resin is a polymer (including a copolymer) mainly containing a constituent unit represented by (-CH₂-CHCl-) (usually in an amount of 60 mass% or more, preferably 70 mass% or more, more preferably 80 mass% or more, and typically 90 to 100 mass%, based on 100 mass% of the total of all the constituent units).

Examples of the (A) polyvinyl chloride resin include polyvinyl chloride (vinyl chloride homopolymer); vinyl chloride copolymer between vinyl chloride and another monomer copolymerizable with vinyl chloride such as vinyl chloride-vinyl acetate copolymer, vinyl chloride-(meth)acrylic acid copolymer, vinyl chloride-methyl(meth)acrylate copolymer, vinyl chloride-ethyl(meth)acrylate copolymer, vinyl chloride-maleate ester copolymer, vinyl chloride-ethylene copolymer, vinyl chloride-propylene copolymer, vinyl chloride-styrene copolymer, vinyl chloride-isobutylene copolymer, vinyl chloride-vinylidene chloride copolymer, vinyl chloride-styrene-maleic anhydride terpolymer, vinyl chloride-styrene acrylonitrile terpolymer, vinyl chloride-butadiene copolymer, vinyl chloride-isoprene copolymer, vinyl chloride-chlorinated propylene copolymer, vinyl chloride-vinylidene chloride-vinyl acetate terpolymer, vinyl chloride-acrylonitrile copolymer, and vinyl chloride-various vinyl ethers copolymer; and those obtained by modifying (chlorinating or the like) polyvinyl chloride or vinyl chloride copolymer, such as post-chlorinated vinyl copolymer. Furthermore, in the present specification, chlorinated polyolefins such as chlorinated polyethylene are also included in the category of the (A) polyvinyl chloride resin.

The (A) polyvinyl chloride resin may preferably comprise a polyvinyl chloride (i.e., a vinyl chloride homopolymer).

The average polymerization degree of the (A) polyvinyl chloride resin may be preferably 2500 or less, more preferably 1500 or less, still more preferably 1300 or less, and most preferably 1000 or less from the viewpoint of suppressing coloring when a film is continuously produced. On the other hand, the average polymerization degree of the polyvinyl chloride resin may be preferably 300 or more, more preferably 500 or more, and still more preferably 650 or more from the viewpoint of mechanical properties of the film.

In the present specification, the average polymerization degree of the polyvinyl chloride resin is calculated from the specific viscosity measured in accordance with 4.1 specific viscosity of JIS K6720-2:1999 by the formulas (1) and (2) in the JIS standard.

As the (A) polyvinyl chloride resin, one kind or a mixture of two or more kinds thereof can be used.

### (B) Core-shell rubber

The polyvinyl chloride resin composition of the present invention may further comprise (B) a core-shell rubber in an embodiment. The incorporation of the core-shell rubber into the composition allows the film formability with rolling of calender roll and the weather resistance of a product film to be improved.

Examples of the (B) core-shell rubber include methacrylic acid ester-styrene/butadiene rubber graft copolymer, methacrylic acid ester-styrene/styrene-butadiene rubber graft copolymer, acrylonitrile-styrene/butadiene rubber graft copolymer, acrylonitrile-styrene/styrene-butadiene rubber graft copolymer, acrylonitrile-styrene/ethylene-propylene rubber graft copolymer, acrylonitrile-styrene/acrylic acid ester rubber graft copolymer, methacrylic acid ester/acrylic acid ester rubber graft copolymer, methacrylic acid ester-styrene/acrylic acid ester rubber graft copolymer, and methacrylic acid ester-acrylonitrile/acrylic acid ester rubber graft copolymer.

From the viewpoint of weather resistance, the (B) core-shell rubber may preferably comprise an acrylic core-shell rubber in which a (meth)acrylic acid ester, acrylonitrile, styrene, or the like is graft-copolymerized with a (meth)acrylic acid ester rubber. Examples of the acrylic core-shell rubber include acrylonitrile-styrene/acrylic acid ester rubber graft copolymer, methacrylic acid ester/acrylic acid ester rubber graft copolymer, methacrylic acid ester-styrene/acrylic acid ester rubber graft copolymer, and methacrylic acid ester-acrylonitrile/acrylic acid ester rubber graft copolymer. In the present specification, the "(meth)acrylic acid ester" means an acrylic acid ester or a methacrylic acid ester.

As the (B) core-shell rubber, one kind or a mixture of two or more kinds thereof can be used.

The amount of the (B) core-shell rubber is not particularly limited because it is an optional component. The amount of the (B) core-shell rubber may be, based on 100 mass% of the sum of the amount of the (A) polyvinyl chloride resin and the amount of the (B) core-shell rubber, from the viewpoint of reliably obtaining the effect of improving the calender roll rolling film formability and from the viewpoint of weather resistance, usually 0 mass% or more (100 mass% or less of the component (A)), preferably 1 mass% or more (99 mass% or less of the component (A)), more preferably 3 mass% or more (97 mass% or less of the component (A)), and still more preferably 5 mass% or more (95 mass% or less of the component (A)). On the other hand, the amount of the (B) core-shell rubber may be, based on 100 mass% of the sum of the amount of the (A) polyvinyl chloride resin and the amount of the (B) core-shell rubber, from the viewpoint of the mechanical properties of the film, preferably 40 mass% or less (60 mass% or more of the component (A)), more preferably 30 mass% or less (70 mass% or more of the component (A)), still more preferably 20 mass% or less (80 mass% or more of the component (A)), and most preferably 15 mass% or less (85 mass% or more of the component (A)).

The amount of the (B) core-shell rubber may be, based on 100 mass% of the sum of the amount of the (A) polyvinyl chloride resin and the amount of the (B) core-shell rubber, usually 0 mass% or more and 40 mass% or less, preferably 0 mass% or more and 30 mass% or less, 0 mass% or more and 20 mass% or less, 0 mass% or more and 15 mass% or less, 1 mass% or more and 40 mass% or less, 1 mass% or more and 30 mass% or less, 1 mass% or more and 20 mass% or less, 1 mass% or more and 15 mass% or less, 3 mass% or more and 40 mass% or less, 3 mass% or more and 30 mass% or less, 3 mass% or more and 20 mass% or less, 3 mass% or more and 15 mass% or less, 5 mass% or more and 40 mass% or less, 5 mass% or more and 30 mass% or less, 5 mass% or more and 20 mass% or less, or 5 mass% or more and 15 mass% or less.

### (C) β-diketone compound

The polyvinyl chloride resin composition of the present invention comprises (C) a β-diketone compound. The (C) β-diketone compound is an organic compound having a structure in which two ketones are bonded via one carbon atom (-CO-C-CO-). The (C) β-diketone compound also includes a trione compound having a β-diketone structure. The present inventor has found that the (C) β-diketone compound can act so as to remarkably suppress coloring when a film is continuously produced by a synergistic action with the (D) phosphite compound.

Examples of the (C) β-diketone compound include acetylacetone, triacetylmethane, 2,4,6-heptatrione, butanoylacetylmethane, lauroylacetylmethane, palmitoylacetylmethane, stearoylbenzoylmethane(1-phenyl-1,3-eicosanedione), palmitoylbenzoylmethane, distearoylmethane (stearoyl group = octadecanoyl group), stearoylacetylmethane, phenylacetylacetylmethane, dicyclohexylcarbonylmethane, benzoylformylmethane, benzoylacetylmethane, dibenzoylmethane, octylbenzoylmethane, bis(4-octylbenzoyl)methane, benzoyldiacetylmethane, 4-methoxybenzoylbenzoylmethane, bis(4-carboxymethylbenzoyl)methane, 2-carboxymethylbenzoylacetyloctylmethane, dehydroacetic acid, ethyl acetoacetate, cyclohexane-1,3-dione, methyl 3,6-dimethyl-2,4-dioxycyclohexane-1-carboxylate, 2-acetylcyclohexanone, dimedone, 2-benzoylcyclohexane-1-one, and 2-benzoylcyclohexane-1,3-dione, and derivatives such as metal salts such as lithium salts, sodium salts, potassium salts, calcium salts, zinc salts, magnesium salts, and aluminum salts thereof.

The (C) β-diketone compound may preferably contain one or more selected from the group consisting of dibenzoylmethane, stearoylbenzoylmethane, derivatives of dibenzoylmethane, and derivatives of stearoylbenzoylmethane from the viewpoint of suppressing coloring when a film is continuously produced.

As the (C) β-diketone compound, one kind or a mixture of two or more kinds thereof can be used.

The amount of the (C) β-diketone compound may be, from the viewpoint of suppressing coloring when a film is continuously produced, based on 100 parts by mass of the resin mixture consisting of the (A) polyvinyl chloride resin and the (B) core-shell rubber, usually 0.01 parts by mass or more, preferably 0.03 parts by mass or more, and more preferably 0.05 parts by mass or more. On the other hand, from the viewpoint of weather resistance, the amount may be usually 5 parts by mass or less, preferably 1 part by mass or less, more preferably 0.5 parts by mass or less, still more preferably 0.3 parts by mass or less, still more preferably 0.2 parts by mass or less, and most preferably 0.1 parts by mass or less.

The amount of the (C) β-diketone compound may be, based on 100 parts by mass of the resin mixture consisting of the (A) polyvinyl chloride resin and the (B) core-shell rubber, usually 0.01 parts by mass or more and 5 parts by mass or less, preferably 0.01 parts by mass or more and 1 part by mass or less, 0.01 parts by mass or more and 0.5 parts by mass or less, 0.01 parts by mass or more and 0.3 parts by mass or less, 0.01 parts by mass or more and 0.2 parts by mass or less, 0.01 parts by mass or more and 0.1 parts by mass or less, 0.03 parts by mass or more and 1 part by mass or less, 0.03 parts by mass or more and 0.5 parts by mass or less, 0.03 parts by mass or more and 0.3 parts by mass or less, 0.03 parts by mass or more and 0.2 parts by mass or less, 0.03 parts by mass or more and 0.1 parts by mass or less, 0.05 parts by mass or more and 1 part by mass or less, 0.05 parts by mass or more and 0.5 parts by mass or less, 0.05 parts by mass or more and 0.3 parts by mass or less, 0.05 parts by mass or more and 0.2 parts by mass or less, or 0.05 parts by mass or more and 0.1 parts by mass or less.

### (D) Phosphite compound

The polyvinyl chloride resin composition of the present invention comprises (D) a phosphite compound. The (D) phosphite compound is an organic compound having a phosphite structure. In addition, the phosphite compound is an organic compound having a function of decomposing a peroxide and a function of reducing a quinone structure to a phenol structure, and serving as a so-called secondary antioxidant. The present inventor has found that the (D) phosphite compound can act so as to remarkably suppress coloring when a film is continuously produced by a synergistic action with the (C) β-diketone compound.

Examples of the (D) phosphite compound include:
a compound having one phosphite structure in one molecule, such as:
trialkyl phosphites such as trioleyl phosphite, trilauryl phosphite, triisodecyl phosphite, and tris(2-ethylhexyl)phosphite; alkyl aryl phosphites such as 2-ethylhexyldiphenyl phosphite, isodecyldiphenyl phosphite, diphenyldecyl phosphite, and 2,2'-methylenebis(4,6-di-tert-butylphenyl)2-ethylhexyl phosphite; and triaryl phosphites such as tris-(2,4-di-tert-butylphenyl)phosphite, trisnonylphenyl phosphite, tricresyl phosphite, and triphenyl phosphite; and
a compound having two or more phosphite structures in one molecule, such as: tetraphenyldipropyleneglycol diphosphite, 4,4'-butylidenebis(3-methyl-6-tert-butylphenylditridecyl phosphite), bis(decyl)pentaerythritol diphosphite, bis(tridecyl)pentaerythritol diphosphite, distearylpentaerythritol diphosphite, tetra-dodecyl(propane-2,2-diylbis(4,1-phenylene))bis(phosphite), 3,9-bis(octadecyloxy)-2,4,8,10-tetraoxa-3,9-diphosphaspiro[5.5]undecane, and 3,9-bis(2,6-di-tert-butyl-4-methylphenoxy)-2,4,8,10-tetraoxa-3,9-diphosphaspiro[5.5]undecane.

The (D) phosphite compound may preferably comprise a compound having one phosphite structure in one molecule from the viewpoint of suppressing a trouble of bleeding out to the film surface. The (D) phosphite compound may comprise no compound having two or more phosphite structures in one molecule in an embodiment from the viewpoint of suppressing a trouble of bleeding out to the film surface.

In the present specification, not comprising a certain component means that the component is not intentionally blended. In the technical field of polyvinyl chloride resin compositions, when a certain component is intentionally blended, usually 0.01 parts by mass or more thereof is blended in the composition. Therefore, in the polyvinyl chloride resin composition of the present invention, not comprising a certain component means, in other words, that the content of the component is usually less than 0.01 parts by mass, preferably 0.001 parts by mass or less, more preferably 0.0001 parts by mass or less, and still more preferably substantially 0 parts by mass, based on 100 parts by mass of the resin mixture consisting of the component (A) polyvinyl chloride resin and the component (B) core-shell rubber.

From the viewpoint of suppressing coloring when a film is continuously produced, the (D) phosphite compound may preferably include one or more selected from the group consisting of a trialkyl phosphite, an alkyl aryl phosphite, and a triaryl phosphite, more preferably include one or more selected from the group consisting of a trialkyl phosphite and an alkyl aryl phosphite, and still more preferably include a trialkyl phosphite. In a preferred embodiment, the (D) phosphite compound may include a trialkyl phosphite and an alkyl aryl phosphite.

As the (D) phosphite compound, one kind or a mixture of two or more kinds thereof can be used.

The amount of the (D) phosphite compound may be, from the viewpoint of suppressing coloring when a film is continuously produced, based on 100 parts by mass of the resin mixture consisting of the (A) polyvinyl chloride resin and the (B) core-shell rubber, usually 0.01 parts by mass or more, preferably 0.05 parts by mass or more, more preferably 0.1 parts by mass or more, still more preferably 0.3 parts by mass or more, and most preferably 0.5 parts by mass or more. On the other hand, the amount of the (D) phosphite compound may be, from the viewpoint of suppressing a trouble caused by hydrolysis of the phosphite compound, based on 100 parts by mass of the resin mixture consisting of the (A) polyvinyl chloride resin and the (B) core-shell rubber, usually 10 parts by mass or less, preferably 5 parts by mass or less, more preferably 3 parts by mass or less, still more preferably 2 parts by mass or less, and most preferably 1.5 parts by mass or less.

The amount of the (D) phosphite compound may be, based on 100 parts by mass of the resin mixture consisting of the (A) polyvinyl chloride resin and the (B) core-shell rubber, usually 0.01 parts by mass or more and 10 parts by mass or less, preferably 0.01 parts by mass or more and 5 parts by mass or less, 0.01 parts by mass or more and 3 parts by mass or less, 0.01 parts by mass or more and 2 parts by mass or less, 0.01 parts by mass or more and 1.5 parts by mass or less, 0.05 parts by mass or more and 10 parts by mass or less, 0.05 parts by mass or more and 5 parts by mass or less, 0.05 parts by mass or more and 3 parts by mass or less, 0.05 parts by mass or more and 2 parts by mass or less, 0.05 parts by mass or more and 1.5 parts by mass or less, 0.1 parts by mass or more and 10 parts by mass or less, 0.1 parts by mass or more and 5 parts by mass or less, 0.1 parts by mass or more and 3 parts by mass or less, 0.1 parts by mass or more and 2 parts by mass or less, 0.1 parts by mass or more and 1.5 parts by mass or less, 0.3 parts by mass or more and 10 parts by mass or less, 0.3 parts by mass or more and 5 parts by mass or less, 0.3 parts by mass or more and 3 parts by mass or less, 0.3 parts by mass or more and 2 parts by mass or less, 0.3 parts by mass or more and 1.5 parts by mass or less, 0.5 parts by mass or more and 10 parts by mass or less, 0.5 parts by mass or more and 5 parts by mass or less, 0.5 parts by mass or more and 3 parts by mass or less, 0.5 parts by mass or more and 2 parts by mass or less, or 0.5 parts by mass or more and 1.5 parts by mass or less.

### (E) Flame retardant

The polyvinyl chloride resin composition of the present invention may further contain (E) a flame retardant in a preferred embodiment. The (E) flame retardant is not particularly limited as long as it is a flame retardant usually used for a polyvinyl chloride resin composition. The component (E) flame retardant is not particularly limited as long as it is a flame retardant that causes no coloring to interfere with imparting a desired design, because of the purpose that it is preferably used for the film base material of wallpaper or a decorative sheet. Here, the (E) flame retardant does not include a compound corresponding to any of the components (A) to (D) and having a flame retardancy improving function. That is, a compound corresponding to any of the components (A) to (D) is excluded from the (E) flame retardant.

Examples of the (E) flame retardant include an antimony-containing flame retardant, a halogen-based flame retardant, a metal hydroxide, a zinc-based flame retardant, a phosphorus-based flame retardant, and a nitrogen-containing compound-based flame retardant.

Examples of the antimony-containing flame retardant include diantimony trioxide, diantimony pentoxide, antimony trichloride, antimony borate, and antimony molybdate.

Examples of the halogen-based flame retardant include brominated hydrocarbon flame retardants such as 1,2-bis(pentabromophenyl)ethane, pentabromodiphenyl ether, octabromodiphenyl ether, decabromodiphenyl ether, tetrabromobisphenol A, hexabromocyclododecane, bis(tetrabromophthalimide)ethane, poly(dibromopropyl ether), tetrabromobisphenol A carbonate oligomer, tetrabromobisphenol epoxy oligomer, tetrabromobisphenol A-bis(dibromopropyl ether), brominated polystyrene, and hexabromobenzene; and chlorinated hydrocarbon flame retardants such as chlorinated paraffin, chlorinated polyphenyl, and perchloropentacyclodecane.

Examples of the metal hydroxide include aluminum hydroxide and magnesium hydroxide.

Examples of the zinc-based flame retardant include zinc stannate and zinc borate.

Examples of the phosphorus-based flame retardant include organic phosphoric acid ester-based flame retardants such as trimethyl phosphate, triethyl phosphate, tributyl phosphate, triphenyl phosphate, tributoxyethyl phosphate, tricresyl phosphate, trineopentyl phosphate, tri(2-ethylhexyl)phosphate, tri(butylated phenyl)phosphate, tri(isopropylated phenyl)phosphate, triphenyl phosphate, trixylenyl phosphate, and t-butyldiphenyl phosphate; condensed organic phosphoric acid ester-based flame retardants containing, as a main component, a compound in which two or three or more molecules of one or two or more organic phosphoric acid esters are condensed; brominated organic phosphoric acid ester-based flame retardants such as a compound in which one or two or more hydrogen atoms of an organic phosphoric acid ester or a condensed organic phosphoric acid ester are substituted with a bromine atom, for example, tris(tribromoneopentyl)phosphate; chlorinated organic phosphoric acid ester-based flame retardants such as a compound in which one or two or more hydrogen atoms of an organic phosphoric acid ester or a condensed organic phosphoric acid ester are substituted with a chlorine atom, for example, tris(2,3-dichloropropyl)phosphate; and ammonium polyphosphate-based flame retardants.

Examples of the nitrogen-containing compound-based flame retardant include cyanurate-based flame retardants such as melamine cyanurate, tris(2-hydroxyethyl)isocyanurate, and tris(2,3-epoxypropyl)isocyanurate; triazine-based flame retardants; and guanidine-based flame retardants.

From the viewpoint of passing the test for fireproof materials specified by a notice of the Ministry of Land, Infrastructure, Transport and Tourism with a smaller amount, the (E) flame retardant may preferably contain one or more selected from the group consisting of the brominated hydrocarbon flame retardant and the antimony-containing flame retardant. In a preferred embodiment, the (E) flame retardant may contain the brominated hydrocarbon flame retardant and the antimony-containing flame retardant.

In another embodiment, the (E) flame retardant may contain a flame retardant containing a halogen element. Examples of the flame retardant containing a halogen element include the halogen-based flame retardants such as the brominated hydrocarbon flame retardants, the brominated organic phosphoric acid ester-based flame retardants, and the chlorinated organic phosphoric acid ester-based flame retardants.

As the (E) flame retardant, one kind or a mixture of two or more kinds thereof can be used.

The amount of the (E) flame retardant is not particularly limited because it is an optional component.

The polyvinyl chloride resin composition of the present invention may contain no (E) flame retardant in an embodiment.

The amount of the (E) flame retardant may be, from the viewpoint of passing the test for fireproof materials specified by a notice of the Ministry of Land, Infrastructure, Transport and Tourism, based on 100 parts by mass of the resin mixture consisting of the (A) polyvinyl chloride resin and the (B) core-shell rubber, preferably 1 part by mass or more, more preferably 3 parts by mass or more, and still more preferably 5 parts by mass or more. On the other hand, the amount of the (E) flame retardant may be, from the viewpoint of suppressing coloring when a film is continuously produced, based on 100 parts by mass of the resin mixture consisting of the (A) polyvinyl chloride resin and the (B) core-shell rubber, preferably 100 parts by mass or less, more preferably 60 parts by mass or less, still more preferably 35 parts by mass or less, still more preferably 20 parts by mass or less, and most preferably 15 parts by mass or less.

The amount of the (E) flame retardant may be, based on 100 parts by mass of the resin mixture consisting of the (A) polyvinyl chloride resin and the (B) core-shell rubber, usually 0 parts by mass or more and 100 parts by mass or less, preferably 0 parts by mass or more and 60 parts by mass or less, 0 parts by mass or more and 35 parts by mass or less, 0 parts by mass or more and 20 parts by mass or less, 0 parts by mass or more and 15 parts by mass or less, 1 part by mass or more and 100 parts by mass or less, 1 part by mass or more and 60 parts by mass or less, 1 part by mass or more and 35 parts by mass or less, 1 part by mass or more and 20 parts by mass or less, 1 part by mass or more and 15 parts by mass or less, 3 parts by mass or more and 100 parts by mass or less, 3 parts by mass or more and 60 parts by mass or less, 3 parts by mass or more and 35 parts by mass or less, 3 parts by mass or more and 20 parts by mass or less, 3 parts by mass or more and 15 parts by mass or less, 5 parts by mass or more and 100 parts by mass or less, 5 parts by mass or more and 60 parts by mass or less, 5 parts by mass or more and 35 parts by mass or less, 5 parts by mass or more and 20 parts by mass or less, or 5 parts by mass or more and 15 parts by mass or less.

### (F) Plasticizer

The polyvinyl chloride resin composition of the present invention may further contain (F) a plasticizer as desired as long as the object of the present invention is not impaired. The (F) plasticizer is not particularly limited as long as it is a plasticizer usually used for a polyvinyl chloride resin composition. Here, the (F) plasticizer does not include a compound corresponding to any of the components (B) to (E) and having a function of plasticizing the (A) polyvinyl chloride resin. That is, a compound corresponding to any of the components (B) to (E) is excluded from the (F) plasticizer.

Examples of the (F) plasticizer include a phthalic acid ester-based plasticizer, a trimellitic acid ester-based plasticizer, a pyromellitic acid ester-based plasticizer, an adipic acid ester-based plasticizer, an itaconic acid ester-based plasticizer, a citric acid ester-based plasticizer, a cyclohexane dicarboxylate-based plasticizer, and an epoxy-based plasticizer.

Examples of the (F) plasticizer include a polyester-based plasticizer obtained by using a polyhydric alcohol such as ethylene glycol, diethylene glycol, triethylene glycol, 1,2-propylene glycol, 1,3-propylene glycol, 1,3-butanediol, 1,4-butanediol, 1,5-hexanediol, 1,6-hexanediol, and neopentyl glycol, using a polycarboxylic acid such as oxalic acid, malonic acid, succinic acid, glutaric acid, adipic acid, trimellitic acid, pimelic acid, suberic acid, maleic acid, azelaic acid, sebacic acid, fumaric acid, phthalic acid, isophthalic acid, and terephthalic acid, and as necessary, using a stopper such as a monohydric alcohol and a monocarboxylic acid.

Examples of the phthalic acid ester-based plasticizer include dibutyl phthalate, butylhexyl phthalate, diheptyl phthalate, di(2-ethylhexyl)phthalate, diisononyl phthalate, diisodecyl phthalate, diundecyl phthalate, ditridecyl phthalate, dilauryl phthalate, dicyclohexyl phthalate, and dioctyl terephthalate.

Examples of the trimellitic acid ester-based plasticizer include tri(2-ethylhexyl)trimellitate, tri(n-octyl)trimellitate, and tri(isononyl)trimellitate.

Examples of the adipic acid ester-based plasticizer include bis(2-ethylhexyl)adipate, dioctyl adipate, diisononyl adipate, and diisodecyl adipate.

Examples of the epoxy-based plasticizer include epoxidized soybean oil, epoxidized linseed oil, epoxidized fatty acid octyl ester, and epoxidized fatty acid alkyl ester.

Other examples of the (F) plasticizer include a trimellitic acid-based plasticizer, a tetrahydrophthalic acid diester-based plasticizer, a glycerin ester-based plasticizer, an epoxy hexahydrophthalic acid diester-based plasticizer, an isosorbide diester-based plasticizer, a phosphate-based plasticizer, an azelaic acid-based plasticizer, a sebacic acid-based plasticizer, a stearic acid-based plasticizer, a citric acid-based plasticizer, a pyromellitic acid-based plasticizer, a biphenyltetracarboxylic acid ester-based plasticizer, and a chlorine-based plasticizer.

As the (F) plasticizer, one kind or a mixture of two or more kinds thereof can be used.

The amount of the (F) plasticizer is not particularly limited because it is an optional component.

The polyvinyl chloride resin composition of the present invention may contain no (F) plasticizer in an embodiment.

The amount of the (F) plasticizer may be, from the viewpoint of calender roll rolling film formability, based on 100 parts by mass of the resin mixture consisting of the (A) polyvinyl chloride resin and the (B) core-shell rubber, preferably 1 part by mass or more, more preferably 5 parts by mass or more, still more preferably 10 parts by mass or more, and most preferably 15 parts by mass or more. On the other hand, the amount of the (F) plasticizer may be, from the viewpoint of suppressing a trouble caused by migration of the plasticizer, printability, and blocking resistance, based on 100 parts by mass of the resin mixture consisting of the (A) polyvinyl chloride resin and the (B) core-shell rubber, usually 250 parts by mass or less, preferably 150 parts by mass or less, more preferably 100 parts by mass or less, still more preferably 60 parts by mass or less, still more preferably 45 parts by mass or less, and most preferably 35 parts by mass or less.

The amount of the (F) plasticizer may be, based on 100 parts by mass of the resin mixture consisting of the (A) polyvinyl chloride resin and the (B) core-shell rubber, usually 0 parts by mass or more and 250 parts by mass or less, preferably 0 parts by mass or more and 150 parts by mass or less, 0 parts by mass or more and 100 parts by mass or less, 0 parts by mass or more and 60 parts by mass or less, 0 parts by mass or more and 45 parts by mass or less, 0 parts by mass or more and 35 parts by mass or less, 1 part by mass or more and 250 parts by mass or less, 1 part by mass or more and 150 parts by mass or less, 1 part by mass or more and 100 parts by mass or less, 1 part by mass or more and 60 parts by mass or less, 1 part by mass or more and 45 parts by mass or less, 1 part by mass or more and 35 parts by mass or less, 5 parts by mass or more and 250 parts by mass or less, 5 parts by mass or more and 150 parts by mass or less, 5 parts by mass or more and 100 parts by mass or less, 5 parts by mass or more and 60 parts by mass or less, 5 parts by mass or more and 45 parts by mass or less, 5 parts by mass or more and 35 parts by mass or less, 10 parts by mass or more and 250 parts by mass or less, 10 parts by mass or more and 150 parts by mass or less, 10 parts by mass or more and 100 parts by mass or less, 10 parts by mass or more and 60 parts by mass or less, 10 parts by mass or more and 45 parts by mass or less, 10 parts by mass or more and 35 parts by mass or less, 15 parts by mass or more and 250 parts by mass or less, 15 parts by mass or more and 150 parts by mass or less, 15 parts by mass or more and 100 parts by mass or less, 15 parts by mass or more and 60 parts by mass or less, 15 parts by mass or more and 45 parts by mass or less, or 15 parts by mass or more and 35 parts by mass or less.

### (G) Barium-zinc composite compound

The polyvinyl chloride resin composition of the present invention may further contain (G) a barium-zinc composite compound in a preferred embodiment. The (G) barium-zinc composite compound serves as a stabilizer of the polyvinyl chloride resin composition, typically, as a scavenger of free chlorine.

Examples of the (G) barium-zinc composite compound include an organic acid barium-zinc composite salt containing barium, zinc, and an organic acid; and a mixture of a barium salt of an organic acid and a zinc salt of an organic acid.

Examples of the organic acid include a saturated fatty acid, an unsaturated fatty acid, and an aromatic carboxylic acid.

Examples of the saturated fatty acid include linear saturated fatty acids such as caproic acid, enanthic acid, caprylic acid, pelargonic acid, capric acid, lauric acid, myristic acid, palmitic acid, stearic acid, and 12-hydroxystearic acid; branched saturated fatty acids such as 2-ethylhexanoic acid and 2-ethyloctanoic acid; and saturated fatty acids having an alicyclic moiety such as cyclohexanecarboxylic acid, 4-methylcyclohexanecarboxylic acid, and 4-ethylcyclohexanecarboxylic acid.

Examples of the unsaturated fatty acid include mono-unsaturated fatty acids such as crotonic acid, ricinoleic acid, oleic acid, behenic acid, and erucic acid; di-unsaturated fatty acids such as linoleic acid; and tri-unsaturated fatty acids such as linolenic acid.

Examples of the aromatic carboxylic acid include benzoic acid, toluic acid (o-toluic acid, m-toluic acid, and p-toluic acid, in particular p-toluic acid), ethylbenzoic acid, isopropylbenzoic acid, 3-tert-butylbenzoic acid, 4-tert-butylbenzoic acid, 3,5-di-tert-butylbenzoic acid, salicylic acid, 5-tert-butylsalicylic acid, 3,5-di-tert-butylsalicylic acid, and naphthenic acid.

As the (G) barium-zinc composite compound, an organic acid barium-zinc composite salt containing barium, zinc, and one or two or more kinds of the organic acid; and a mixture of a barium salt of one or two or more kinds of the organic acid and a zinc salt of one or two or more kinds of the organic acid may be used.

The (G) barium-zinc composite compound is not particularly limited because it is an optional component.

The polyvinyl chloride resin composition of the present invention may comprise no (G) barium-zinc composite compound in an embodiment.

The amount of the (G) barium-zinc composite compound may be, from the viewpoint of thermal stability and stability of color tone over time, based on 100 parts by mass of the resin mixture consisting of the (A) polyvinyl chloride resin and the (B) core-shell rubber, preferably 0.01 parts by mass or more, more preferably 0.1 parts by mass or more, still more preferably 0.5 parts by mass or more, and most preferably 1 part by mass or more. On the other hand, the amount of the (G) barium-zinc composite compound may be, from the viewpoint of bloom resistance, based on 100 parts by mass of the resin mixture consisting of the (A) polyvinyl chloride resin and the (B) core-shell rubber, preferably 10 parts by mass or less, more preferably 7 parts by mass or less, still more preferably 5 parts by mass or less, and most preferably 4 parts by mass or less.

The amount of the (G) barium-zinc composite compound may be, based on 100 parts by mass of the resin mixture consisting of the (A) polyvinyl chloride resin and the (B) core-shell rubber, usually 0 parts by mass or more and 10 parts by mass or less, preferably 0 parts by mass or more and 7 parts by mass or less, 0 parts by mass or more and 5 parts by mass or less, 0 parts by mass or more and 4 parts by mass or less, 0.01 parts by mass or more and 10 parts by mass or less, 0.01 parts by mass or more and 7 parts by mass or less, 0.01 parts by mass or more and 5 parts by mass or less, 0.01 parts by mass or more and 4 parts by mass or less, 0.1 parts by mass or more and 10 parts by mass or less, 0.1 parts by mass or more and 7 parts by mass or less, 0.1 parts by mass or more and 5 parts by mass or less, 0.1 parts by mass or more and 4 parts by mass or less, 0.5 parts by mass or more and 10 parts by mass or less, 0.5 parts by mass or more and 7 parts by mass or less, 0.5 parts by mass or more and 5 parts by mass or less, 0.5 parts by mass or more and 4 parts by mass or less, 1 part by mass or more and 10 parts by mass or less, 1 part by mass or more and 7 parts by mass or less, 1 part by mass or more and 5 parts by mass or less, or 1 part by mass or more and 4 parts by mass or less.

### (H) Hydrotalcite

The polyvinyl chloride resin composition of the present invention may further comprise (H) a hydrotalcite in an embodiment. The (H) hydrotalcite serves as a stabilizer of the polyvinyl chloride resin composition, typically, as a scavenger of free chlorine.

The (H) hydrotalcite is a layered inorganic compound including a positively charged layer and a negatively charged layer, and is typically an inorganic compound represented by the following formula (1):

[M²⁺_{1-X}M³⁺_{X}(OH)₂]^{X+}[Aⁿ⁻_{X/n} • mH₂O]^{X-} ... (1)

wherein M²⁺ is a divalent metal ion such as Mg²⁺ or Zn²⁺; M³⁺ is a trivalent metal ion such as Al³⁺ or Fe³⁺; Aⁿ⁻ is an n-valent anion such as CO₃²⁻, Cl⁻, or NO³⁻; X is a number satisfying 0 < X ≤ 0.33, typically 0.20 ≤ X ≤ 0.33; and m is a number satisfying 0 ≤ m ≤ 0.5.

From the viewpoint of thermal stability and stability of color tone over time, the (H) hydrotalcite may preferably include a carbonate ion type hydrotalcite, and more preferably contain a carbonate ion magnesium aluminum type hydrotalcite. The carbonate ion type hydrotalcite is an inorganic compound in which the n-valent anion is a carbonate ion (CO₃²⁻) in the formula (1). The carbonate ion magnesium aluminum type hydrotalcite is an inorganic compound in which the n-valent anion is a carbonate ion (CO₃²⁻), the divalent metal ion is a magnesium ion (Mg²⁺), and the trivalent metal ion is an aluminum ion (Al³⁺) in the formula (1). Examples of the carbonate ion magnesium aluminum type hydrotalcite include a compound represented by the following formula (2).

MgsAl₂(OH)₁₆CO₃ · 4H₂O ... (2)

As the (H) hydrotalcite, one kind or a mixture of two or more kinds thereof can be used.

The amount of the (H) hydrotalcite is not particularly limited because it is an optional component.

The polyvinyl chloride resin composition of the present invention may comprise no (H) hydrotalcite in an embodiment.

The amount of the (H) hydrotalcite may be, from the viewpoint of thermal stability and stability of color tone over time, based on 100 parts by mass of the resin mixture consisting of the (A) polyvinyl chloride resin and the (B) core-shell rubber, usually 0.01 parts by mass or more, preferably 0.05 parts by mass or more, more preferably 0.1 parts by mass or more, and still more preferably 0.2 parts by mass or more. On the other hand, the amount of the (H) hydrotalcite may be, from the viewpoint of suppressing coloring when a film is continuously produced, based on 100 parts by mass of the resin mixture consisting of the (A) polyvinyl chloride resin and the (B) core-shell rubber, usually 3 parts by mass or less, preferably 2 parts by mass or less, and more preferably 1 part by mass or less.

The amount of the (H) hydrotalcite may be, based on 100 parts by mass of the resin mixture consisting of the (A) polyvinyl chloride resin and the (B) core-shell rubber, usually 0 parts by mass or more and 3 parts by mass or less, preferably 0 parts by mass or more and 2 parts by mass or less, 0 parts by mass or more and 1 part by mass or less, 0.01 parts by mass or more and 3 parts by mass or less, 0.01 parts by mass or more and 2 parts by mass or less, 0.01 parts by mass or more and 1 part by mass or less, 0.05 parts by mass or more and 3 parts by mass or less, 0.05 parts by mass or more and 2 parts by mass or less, 0.05 parts by mass or more and 1 part by mass or less, 0.1 parts by mass or more and 3 parts by mass or less, 0.1 parts by mass or more and 2 parts by mass or less, 0.1 parts by mass or more and 1 part by mass or less, 0.2 parts by mass or more and 3 parts by mass or less, 0.2 parts by mass or more and 2 parts by mass or less, or 0.2 parts by mass or more and 1 part by mass or less.

### (J) Ultraviolet absorber

The polyvinyl chloride resin composition of the present invention may further comprise (J) an ultraviolet absorber in an embodiment. Here, the (J) ultraviolet absorber does not include a compound corresponding to any of the components (A) to (H) and having an ultraviolet-absorbing function. That is, a compound corresponding to any of the components (A) to (H) is excluded from the (J) ultraviolet absorber.

Examples of the (J) ultraviolet absorber include a benzotriazole-based ultraviolet absorber, a triazine-based ultraviolet absorber, a benzophenone-based ultraviolet absorber, a cyanoacrylate-based ultraviolet absorber, an aromatic benzoate-based ultraviolet absorber, and an oxalic anilide-based ultraviolet absorber.

Examples of the benzotriazole-based ultraviolet absorber include 2-(5-chloro-2H-benzotriazole-2-yl)-4-methyl-6-tert-butylphenol, 2-(2H-benzotriazole-2-yl)-4,6-bis(1-methyl-1-phenylethyl)phenol, 2-(2H-benzotriazole-2-yl)-4-(1,1,3,3-tetramethylbutyl)phenol, 2,2'-methylenebis[6-(2H-benzotriazole-2-yl)-4-(1,1,3,3-tetramethylbutyl)phenol], and 2-(2H-benzotriazole-2-yl)-p-cresol.

Examples of the triazine-based ultraviolet absorber include 2-(4,6-diphenyl-1,3,5-triazine-2-yl)-5-[2-(2-ethylhexanoyloxy)ethoxy]phenol, and 2,4,6-tris(2-hydroxy-4-hexyloxy-3-methylphenyl)-1,3,5-triazine.

Examples of the benzophenone-based ultraviolet absorber include [2-hydroxy-4-(octyloxy)phenyl](phenyl)methanone, 2,2',4,4'-tetrahydroxybenzophenone, and 2,2'-dihydroxy-4,4'-dimethoxybenzophenone.

Examples of the cyanoacrylate-based ultraviolet absorber include ethyl-2-cyano-3,3-diphenylacrylate, 2-ethylhexyl-2-cyano-3,3-diphenylacrylate, and pentaerythritol tetrakis(3,3-diphenyl-2-cyanoacrylate).

Examples of the aromatic benzoate-based ultraviolet absorber include 4-tert-butylphenyl salicylate, 4-octylphenyl salicylate, resorcinol monobenzoate, 2,4-di-tert-butylphenyl-3,5-di-tert-butyl-4-hydroxybenzoate, and hexadecyl-3,5-di-tert-butyl-4-hydroxybenzoate.

Examples of the oxalic anilide-based ultraviolet absorber include 2-ethyl-2'-ethoxyoxanilide and 2-ethoxy-4'-dodecyloxanilide.

As the (J) ultraviolet absorber, one kind or a mixture of two or more kinds thereof can be used.

The amount of the (J) ultraviolet absorber is not particularly limited because it is an optional component.

The polyvinyl chloride resin composition of the present invention may comprise no (J) ultraviolet absorber in an embodiment.

The amount of the (J) ultraviolet absorber may be, from the viewpoint of stability of color tone over time and weather resistance, based on 100 parts by mass of the resin mixture consisting of the (A) polyvinyl chloride resin and the (B) core-shell rubber, preferably 0.01 parts by mass or more, more preferably 0.05 parts by mass or more, still more preferably 0.1 parts by mass or more, and most preferably 0.2 parts by mass or more. On the other hand, the amount of the (J) ultraviolet absorber may be, from the viewpoint of suppressing a trouble of the ultraviolet absorber bleeding out to the film surface, based on 100 parts by mass of the resin mixture consisting of the (A) polyvinyl chloride resin and the (B) core-shell rubber, preferably 10 parts by mass or less, more preferably 5 parts by mass or less, still more preferably 3 parts by mass or less, and most preferably 1 part by mass or less.

The amount of the (J) ultraviolet absorber may be, based on 100 parts by mass of the resin mixture consisting of the (A) polyvinyl chloride resin and the (B) core-shell rubber, usually 0 parts by mass or more and 10 parts by mass or less, preferably 0 parts by mass or more and 5 parts by mass or less, 0 parts by mass or more and 3 parts by mass or less, 0 parts by mass or more and 1 part by mass or less, 0.01 parts by mass or more and 10 parts by mass or less, 0.01 parts by mass or more and 5 parts by mass or less, 0.01 parts by mass or more and 3 parts by mass or less, 0.01 parts by mass or more and 1 part by mass or less, 0.05 parts by mass or more and 10 parts by mass or less, 0.05 parts by mass or more and 5 parts by mass or less, 0.05 parts by mass or more and 3 parts by mass or less, 0.05 parts by mass or more and 1 part by mass or less, 0.1 parts by mass or more and 10 parts by mass or less, 0.1 parts by mass or more and 5 parts by mass or less, 0.1 parts by mass or more and 3 parts by mass or less, 0.1 parts by mass or more and 1 part by mass or less, 0.2 parts by mass or more and 10 parts by mass or less, 0.2 parts by mass or more and 5 parts by mass or less, 0.2 parts by mass or more and 3 parts by mass or less, or 0.2 parts by mass or more and 1 part by mass or less.

The polyvinyl chloride resin composition of the present invention may further comprise an optional component(s) other than the components (A) to (J) as desired as long as the object of the present invention is not impaired. Examples of the other optional component include a thermoplastic resin(s) other than the (A) polyvinyl chloride resin and the (B) core-shell rubber; and an additive(s) other than the (C) β-diketone compound, the (D) phosphite compound, the (G) barium-zinc composite compound, the (H) hydrotalcite, and the (J) ultraviolet absorber.

Examples of the other thermoplastic resins include a poly(meth)acrylic acid ester, a styrene-(meth)acrylic acid ester copolymer, an ethylene-vinyl acetate copolymer, an ethylene-(meth)acrylic acid copolymer, an ethylene-methyl(meth)acrylate copolymer, and an ethylene-ethyl(meth)acrylate copolymer.

Examples of the other additives include a heat stabilizer such as a calcium-zinc composite compound, an antioxidant such as a hindered phenol compound, a weather resistance stabilizer, a light resistance stabilizer, a lubricant such as oleic acid amide, a wax such as polyethylene wax, an antistatic agent such as a glycerin fatty acid ester, a release agent, a processing aid, an antifouling agent, a nucleating agent, an inorganic particle, an organic particle, an inorganic colorant, and an organic colorant.

As the other optional components, one kind or a mixture of two or more kinds thereof can be used.

The amount of the other optional components is not particularly limited as long as the object of the present invention is not impaired, because they are optional components. The amount of the other optional components may be usually 50 parts by mass or less, 40 parts by mass or less, 30 parts by mass or less, 20 parts by mass or less, 10 parts by mass or less, 5 parts by mass or less, 0 to 1 part by mass, or about 0.01 to 50 parts by mass, based on 100 parts by mass of the resin mixture consisting of the component (A) polyvinyl chloride resin and the component (B) core-shell rubber.

Optionally, the polyvinyl chloride resin composition of the present invention does not comprise one or two or more of the other optional components in an embodiment.

The polyvinyl chloride resin composition of the present invention may comprise no hindered phenol compound in an embodiment. Although not intended to be bound by theory, the hindered phenol compound is an organic compound having a function of scavenging radicals and serving as a so-called primary antioxidant, and is effective from the viewpoint of stopping the oxidation degradation reaction. However, the hindered phenol compound often develops a yellow color or the like because the hindered phenol compound has a quinone structure after serving as an antioxidant.

### 2. Method for producing polyvinyl chloride resin composition

The polyvinyl chloride resin composition of the present invention can be obtained by, with the use of an arbitrary melt-kneading machine, feeding the components (A) to (D) (or the components (A), (C), and (D) without the component (B)) and one or more of the optional components used as desired simultaneously or in an arbitrary order into the melt-kneading machine; and melt-kneading the components preferably at a resin temperature of 120 to 200°C.

Examples of the melt-kneading machine include batch kneading machines such as a pressure kneader and a mixer; extrusion and kneading machines such as a uniaxial extruder, a co-rotating biaxial extruder, and a counter-rotating biaxial extruder; and a calender roll kneader. These may be used in any combination.

The obtained resin composition can be pelletized by an arbitrary method and then molded into an arbitrary article by an arbitrary method. The pelletization can be performed by a method such as hot cutting, strand cutting, and underwater cutting.

In an embodiment, the lump-shaped, rod-shaped, or strand-shaped polyvinyl chloride resin composition discharged from the melt-kneading machine may be sent as it is to an arbitrary molding machine to mold an article.

### 3. Film

The film of the present invention is a film formed from the polyvinyl chloride resin composition of the present invention. The film of the present invention can be suitably used as a film base material of wallpaper or a decorative sheet.

The film of the present invention can be obtained by film formation using the polyvinyl chloride resin composition of the present invention and using an arbitrary film forming machine. Examples of the film forming machine include a calender roll rolling film forming machine provided with a calender roll rolling processor and a winder; and a T-die film forming machine provided with an extruder, a T-die, and a winder.

Examples of the calender roll rolling processor include an upright type three roll, an upright type four roll, an L type four roll, an inverted L type four roll, and a Z type roll. Examples of the extruder include a uniaxial extruder, a co-rotating biaxial extruder, and a counter-rotating biaxial extruder. Examples of the T-die include a manifold die, a fish tail die, and a coat hanger die.

The film of the present invention can be obtained using the polyvinyl chloride resin composition of the present invention, preferably through film formation using a calender roll rolling film forming machine, and more preferably through film formation using a calender roll rolling film forming machine under the condition of a roll temperature of 160 to 200°C.

The thickness of the film of the present invention can be appropriately determined in consideration of film formability, applications and required properties thereof, and handleability. The thickness of the film of the present invention may be usually 20 µm or more, and preferably 50 µm or more from the viewpoint of film formability and handleability. On the other hand, the thickness of the film may be usually 1000 µm or less, preferably 500 µm or less, and more preferably 200 µm or less, from the viewpoint of meeting a demand for reducing the thickness of an article including the film of the present invention.

The film of the present invention may be transparent, may be opaque, may be colored and transparent, or may be colored and opaque.

In an embodiment, the transparent film of the present invention can be suitably used, for example, as a film base material of a decorative sheet to be bonded to glass, such as a glass-dressing film. In an embodiment, the opaque or concealing film of the present invention can be suitably used, for example, as a film base material of a decorative sheet to be used for decoration or dressing of home electric appliances, furniture, and members of buildings, and wallpaper to be used for decoration or dressing of walls of buildings.

FIG. 1 is a conceptual cross-sectional view showing an example of wallpaper using a film of the present invention. The wallpaper includes, in this order from the surface side, a coating film 1 formed using a two-liquid curable urethane coating material, a transparent thermoplastic resin film layer 2, a printing layer 3, a layer 4 of the film of the present invention that is colored white and has concealing properties, and an adhesive layer 5. In the present specification, the "surface side" means the surface side that is usually visually recognized in an actual use state. The "actual use state" refers to, for example, in the case of wallpaper, a state in which the wallpaper is being used for decoration or dressing of walls of buildings.

### EXAMPLES

Hereinafter, the present invention will be described with reference to examples, but the present invention is not limited thereto.

### Measurement methods

### (i) Heat resistance press test (process thermal stability)

The polyvinyl chloride resin composition was used to obtain a sample 1 having a thickness of 1 mm, under the conditions of preheating at a temperature of 180°C for 2 minutes, then hot pressing for 2 minutes, and immediately after that, cooling pressing at a temperature of 20°C for 2 minutes. Next, the L*a*b* coordinates of the sample 1 were determined by the measurement method described later. Next, the sample 1 was used to obtain a sample 2, under the conditions of preheating at a temperature of 190°C for 2 minutes, then hot pressing for 30 minutes, and immediately after that, cooling pressing at a temperature of 20°C for 2 minutes. Subsequently, the L*a*b* coordinates of the sample 2 were determined by the measurement method described later.

Here, the L*a*b* coordinates were measured in accordance with JIS Z8722:2009, where a spectrocolorimeter "CM600d" (trade name) manufactured by KONICA MINOLTA JAPAN, INC. was used; the sample was arranged on the surface of a white plate that is the same as the white calibration plate attached to the spectrocolorimeter; and the XYZ coordinates were measured under the geometric condition c and under the condition where a specular reflection component was included, followed by conversion thereof. From b*(b₂*) of the sample 2 and b*(b₁*) of the sample 1, Δb* was calculated as the difference (b₂* - b₁*) therebetween. In addition, from the L*a*b* coordinates of the sample 1 and the L*a*b* coordinates of the sample 2, the color difference (ΔE) was calculated using the calculation method (ΔE*ab (CIE1976)) built in the spectrocolorimeter. For the measurement of the L*a*b* coordinates and the like, the home page of KONICA MINOLTA JAPAN, INC. (the following address) and the like can be referred to.
http://www.konicaminolta.jp/instruments/knowledge/color/part1/07.html

### Raw materials used

### (A) Polyvinyl chloride resin

(A-1) Polyvinyl chloride homopolymer having an average polymerization degree of 800.

### (B) Core-shell rubber

(B-1) Core-shell rubber (methyl methacrylate-styrene/ethyl acrylate rubber graft copolymer) "METABLEN W-300A" (trade name), from Mitsubishi Chemical Corporation.

### (C) β-diketone compound

(C-1) Dibenzoylmethane. CAS number 120-46-7.

(C-2) Stearoylbenzoylmethane (1-phenyl-1,3-eicosanedione). CAS number 58446-52-9.

### (D) Phosphite compound

(D-1) Alkyl aryl phosphite "ADK STAB 135A" (trade name) from ADEKA CORPORATION. Isodecyldiphenyl phosphite. CAS number 26544-23-0.

(D-2) Trialkyl phosphite "ADK STAB 3010" (trade name) from ADEKA CORPORATION. Triisodecyl phosphite. CAS number 25448-25-3.

(D-3) Triaryl phosphite "ADK STAB TPP" (trade name) from ADEKA CORPORATION. Triphenyl phosphite. CAS number 101-02-0.

### (E) Flame retardant

(E-1) Brominated hydrocarbon flame retardant (1,2-bis(pentabromophenyl)ethane) "SAYTEX8010" (trade name) from ALBEMARLE JAPAN CORPORATION.

(E-2) Antimony-containing flame retardant (diantimony trioxide) "MSA-S" (trade name) from Yamanaka & Co.,Ltd.

### (F) Plasticizer

(F-1) Diisononyl phthalate "DINP" (trade name) from J-PLUS Co., Ltd.

(F-2) Epoxidized soybean oil "O-130S" (trade name) from ADEKA CORPORATION.

### (G) Barium-zinc composite compound

(G-1) Mixture of barium caprate, zinc bis 4-t-butylbenzoate, and zinc bis p-toluate, having a mass ratio of 2 : 1 : 1.

### (H) Hydrotalcite

(H-1) Carbonate ion magnesium aluminum type hydrotalcite "FD-200" (trade name) from Akishima Chemical Industries Co., Ltd.

### (J) Ultraviolet absorber

(J-1) Benzotriazole-based ultraviolet absorber "Tinuvin 326" (trade name) from BASF Japan Ltd.

### (K) Other optional components

(K-1) Acrylic processing aid "P-530A" (trade name) from Mitsubishi Chemical Corporation.

(K-2) Titanium oxide (white pigment) "CR-90" (trade name) from ISHIHARA SANGYO KAISHA, LTD.

### Example 1

A blend was melt-kneaded using a mixer kneader under the condition of a resin temperature of 140°C at the time of discharge to obtain a polyvinyl chloride resin composition, the blend containing 100 parts by mass of a resin mixture consisting of 90 mass% of the component (A-1) and 10 mass% of the component (B-1), 0.20 parts by mass of the component (C-1), 0.50 parts by mass of the component (D-1), 7.5 parts by mass of the component (E-1), 2.5 parts by mass of the component (E-2), 13 parts by mass of the component (F-1), 4 parts by mass of the component (F-2), 3.0 parts by mass of the component (G-1), 0.30 parts by mass of the component (H-1), 0.40 parts by mass of the component (J-1), 1 part by mass of the component (K-1), and 15 parts by mass of the component (K-2).

### Examples 2 to 12

A polyvinyl chloride resin composition was obtained in the same manner as in Example 1 except that the formulation was changed as shown in Table 1. The above test (i) was performed. The results are shown in Table 1.

### [Table 1]

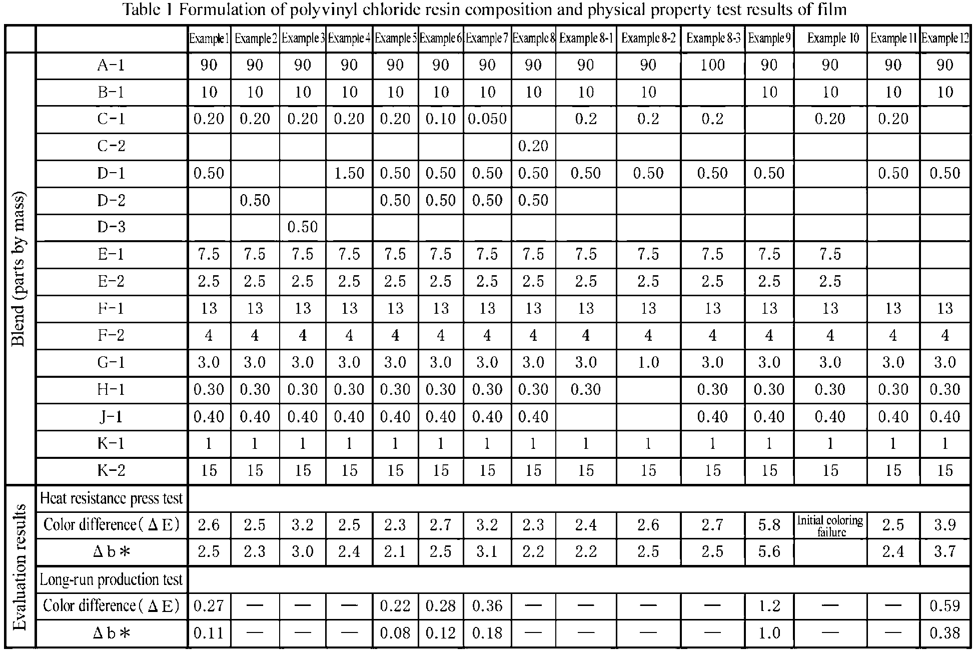

In Example 10, since the color was strongly changed to yellow when the sample 1 for the above test (i) was prepared, it was judged from the beginning that the color tone was poor, and the test was stopped. In the table, it is described as "initial coloring failure" (abbreviation indicating coloring failure at the initial stage of the test).

Furthermore, for Examples 1, 5 to 7, 9, and 12, a long-run production test of the film was performed. Examples 9 and 12 each used a polyvinyl chloride resin composition not containing the component (C), and thus were positioned as comparative examples. The blend shown in Table 1 was melt-kneaded using a mixer kneader under the condition of a resin temperature of 140°C at the time of discharge to obtain a polyvinyl chloride resin composition; then the resin composition was sent as it was to a calender roll rolling film forming machine provided with an inverted L type four roll type calender roll rolling processor and a winder; and a film having a thickness of 80 µm was produced in long-run under the conditions of the first roll: 180°C, the second roll: 180°C, the third roll: 185°C, the fourth roll: 180°C, and a winding speed of 60 m/min. For the film 1 immediately after the start of production and the film 2 at the point of 5000 m continuous production from the start of production, the L*a*b* coordinates were determined by the method described in the above test (i), and the color difference (ΔE) and Δb* were calculated. The results are shown in Table 1.

It was found that the polyvinyl chloride resin composition of the present invention is excellent in process thermal stability even when a flame retardant is contained therein, and suppresses coloring when a film is continuously produced. Therefore, it was believed that the film formed from the polyvinyl chloride resin composition of the present invention can be suitably used as a film base material of wallpaper or a decorative sheet.

### REFERENCE SIGNS LIST

- 1: Coating film formed using a two-liquid curable urethane coating material
- 2: Transparent thermoplastic resin film layer
- 3: Printing layer
- 4: Layer of the film of the present invention that is colored white and has concealing properties
- 5: Adhesive layer

## Claims

1. A polyvinyl chloride resin composition comprising:
100 parts by mass of a resin mixture,
the resin mixture consisting of:
(A) 60 to 100 mass% of a polyvinyl chloride resin, and
(B) 40 to 0 mass% of a core-shell rubber,
wherein the sum of the mass% of (A) the polyvinyl chloride resin and the mass% of (B) the core-shell rubber is 100 mass% in the resin mixture;
(C) a β-diketone compound in an amount of 0.01 to 5 parts by mass based on 100 parts by mass of the resin mixture;
(D) a phosphite compound in an amount of 0.01 to 10 parts by mass based on 100 parts by mass of the resin mixture; and
(E) a flame retardant in an amount of 0 to 100 parts by mass based on 100 parts by mass of the resin mixture.

2. The polyvinyl chloride resin composition according to claim 1, wherein the (D) phosphite compound includes one or more selected from the group consisting of a trialkyl phosphite, an alkyl aryl phosphite, and a triaryl phosphite.

3. The polyvinyl chloride resin composition according to claim 1, wherein the (D) phosphite compound includes one or more selected from the group consisting of a trialkyl phosphite and an alkyl aryl phosphite.

4. The polyvinyl chloride resin composition according to claim 1, wherein the (D) phosphite compound includes a trialkyl phosphite and an alkyl aryl phosphite.

5. The polyvinyl chloride resin composition according to claim 1, comprising no hindered phenol compound.

6. The polyvinyl chloride resin composition according to claim 1, wherein the polyvinyl chloride resin composition further comprises the (E) flame retardant in an amount of 1 to 100 parts by mass based on 100 parts by mass of the resin mixture consisting of the (A) polyvinyl chloride resin and the (B) core-shell rubber.

7. The polyvinyl chloride resin composition according to claim 6, wherein the (E) flame retardant includes a flame retardant containing a halogen element.

8. The polyvinyl chloride resin composition according to claim 6, wherein the (E) flame retardant includes a brominated hydrocarbon flame retardant and an antimony-containing flame retardant.

9. The polyvinyl chloride resin composition according to claim 1, further comprising:
(F) 1 to 250 parts by mass of a plasticizer;
(G) 0.01 to 10 parts by mass of a barium-zinc composite compound;
(H) 0.01 to 3 parts by mass of a hydrotalcite; and
(J) 0.01 to 10 parts by mass of an ultraviolet absorber,
based on 100 parts by mass of the resin mixture consisting of the (A) polyvinyl chloride resin and the (B) core-shell rubber.

10. A film formed from the polyvinyl chloride resin composition according to any one of claims 1 to 9.

11. A wallpaper or a decorative sheet comprising the film according to claim 10.
